# FASCICULE DE BREVET EUROPEEN

(11) **EP 2 733 089 B1**
(45) Date de publication et mention de la délivrance du brevet: **22.02.2017**
(21) Numéro de dépôt: 13193254.3
(22) Date de dépôt: 18.11.2013
(51) Int. Cl.: B65F 3/00

(54) **Profilé longitudinal, et cloison renforcée et caisson comportant ledit profilé**
Verstärktes Profil, und Trennwand und Kastenaufbau mit einem solchen Profil
Longitudinal profile, and reinforced wall and container comprising said profile

(30) Priorité: 20.11.2012 FR 1261017
(43) Date de publication de la demande: 21.05.2014
(73) Titulaire: PB Environnement, 13410 Lambesc (FR)
(72) Inventeur: Le Palud, Frédéric, 13127 VITROLLES (FR); Quarteroni, Philippe, 13113 Lamanon (FR); Reverdy, Christian, 13600 LA CIOTAT (FR)
(74) Mandataire: Schmidt, Martin Peter

(56) Documents cités:
- WO-A1-2005/092651
- WO-A2-2011/071930
- DE-U1- 9 217 216
- US-A- 3 989 157
- US-A- 5 553 906
- US-A1- 2003 011 211

## Description

### Domaine technique de l'invention

La présente invention concerne un profilé longitudinal, une cloison renforcée et un caisson comportant cette cloison. Plus particulièrement, elle concerne une cloison renforcée pour un caisson qui doit supporter, de manière permanente ou occasionnelle, une certaine pression interne qui agit, de manière uniforme ou non, de manière permanent ou intermittente, sur toute ou partie des parois dudit caisson. Ledit caisson est particulièrement utile comme benne de collecte de déchets équipé d'un système de compactage des déchets. Un tel système de compactage de déchets peut exercer une force de plusieurs tonnes, voire d'une dizaine de tonne ; cette force se dirige contre au moins une paroi du caisson, mais le plus souvent, de manière non uniforme et intermittente, contre toutes les parois dudit caisson.

### Etat de la technique

La demande de brevet WO 2005/092651 A1 divulgue un profilé longitudinal selon le préambule de la revendication 1, ainsi q'une cloison renforcée le comportant.

Le brevet américain US 5,553,906 décrit une cloison comportant une paroi double-peau présentant deux faces extérieures dos-à-dos, et un profilé longitudinal de renforcement en U comportant deux côtés et un fond les reliant de manière à définir une glissière longitudinale, les côtés présentant des faces en vis-à-vis définissant la largeur de la glissière, et une corniche se projetant depuis un des côtés, appelé côté interne, et présentant une surface d'appui interne. Les deux faces extérieures dos-à-dos sont reliées entre elles par une épaisse couche de mousse qui assure la cohésion entre les deux faces et contribue à la rigidité mécanique et l'isolation thermique de l'ensemble.

Cette cloison est utilisée pour former habitacle d'un véhicule de camping, de sorte que la paroi double-peau comporte une peau interne - du côté de l'habitacle - et une peau externe. La face extérieure de la peau interne est plaquée, dans la glissière, contre un côté interne de la glissière. La peau externe est quant à elle rapportée sur le côté externe de la glissière, à l'extérieur de cette dernière, au moyen d'une pièce intermédiaire s'engrenant avec ce côté externe. Par ailleurs, la corniche se projette depuis côté interne de la glissière et reçoit un plancher de l'habitacle.

La cloison renforcée décrite dans ce document permet de transférer au moins une partie des efforts appliqués depuis l'intérieur sur la peau interne vers le plancher, par le biais du profilé et de sa corniche.

Cependant, un inconvénient de cette cloison renforcée est que les efforts appliqués depuis l'intérieur sont supportés en grande partie par la peau interne. Or, cela revêt un problème lorsque ces efforts sont très élevés. Cette approche ne convient donc pas aux constructions où les parois latérales doivent supportés des efforts très importants.

Afin de remédier au moins en partie à ces inconvénients, il est proposé dans la présente invention une cloison renforcée du type précité, caractérisée en ce que la paroi double-peau est insérée dans la glissière de manière que les faces extérieures soit respectivement plaquées contre les faces en vis-à-vis.

### Objets de l'invention

Selon l'invention, les forces (pression) venant de l'intérieur du caisson sont renvoyées sur la paroi latérale. Dans ce but on prévoit un profilé qui présente à la fois une surfacé d'appui pour le fond et une gorge d'enchâssement pour la paroi latérale, avec des bords aménagés pour une soudure continue aisée.

De cette manière, la peau externe peut transmettre les efforts venant de la peau interne au côté extérieur du profilé, qui peut les retransmettre au plancher, de sorte que la peau interne ait moins d'efforts à supporter.

Ainsi, un premier objet de l'invention est une cloison renforcée comportant une paroi double-peau présentant deux faces extérieures dos-à-dos, et un profilé longitudinal de renforcement en U. Ledit profilé longitudinal de renforcement en U comporte deux côtés et un fond les reliant de manière à définir une glissière longitudinale, lesdits côtés présentant des faces en vis-à-vis définissant la largeur de la glissière. Par ailleurs, ledit profilé longitudinal de renforcement en U comporte une corniche se projetant depuis un des côtés, appelé côté interne, et présentant une surface d'appui interne. Ladite paroi double-peau est insérée dans la glissière de manière que les faces extérieures soit respectivement plaquées contre les faces en vis-à-vis.

Avantageusement la largeur de ladite surface d'appui interne de la corniche est supérieure à la largeur de la glissière. Elle affleure le côté interne. L'autre côté, appelé côté externe, s'élève au-dessus de la surface d'appui interne de la corniche.

La corniche présente, sous la surface d'appui interne, une surface d'appui oblique se rapprochant de la d'appui interne en s'éloignant du côté interne.

Le fond du profilé longitudinal présente au moins une alvéole longitudinale.

De même, ladite corniche présente au moins une alvéole longitudinale. Dans un mode de réalisation avantageux, ladite corniche présente deux alvéoles longitudinales séparée par une paroi oblique s'éloignant de la surface d'appui interne et du côté interne.

La paroi double peau comporte plusieurs panneaux double-peau côte-à-côte longitudinalement, chaque panneau étant clipsé à son ou ses panneaux adjacents.

Chaque panneau double-peau peut être soudé à son ou ses panneaux double-peau adjacents, soit sur toute la hauteur depuis le fond de la glissière, soit sur une hauteur depuis le fond de la glissière comprise entre 10 et 50 cm ; dans ce dernier cas, il est dépourvu de soudure avec son ou ses panneaux adjacents au-dessus.

Dans un mode de réalisation particulier, la paroi double-peau est soudée longitudinalement au côté interne du profilé.

Un autre objet de l'invention est un caisson, notamment un caisson de benne de collecte de déchets, comportant au moins une cloison renforcée droite selon l'invention, dont la paroi double-peau forme une paroi latérale droite du caisson, et une cloison renforcée gauche selon l'invention, dont la paroi double-peau forme une paroi latérale gauche du caisson, les corniches se projetant vers l'intérieur du caisson.

Ce caisson de benne de collecte de déchets peut comporter en outre un fond reliant les parois latérales, ledit fond comportant une partie centrale plane et une partie arrière plane inclinée par rapport à la partie centrale de manière à s'élever vers l'arrière par rapport à la partie centrale. Avantageusement, la partie arrière fait un angle avec la partie centrale compris entre 55° et 70°, de préférence entre 60° et 70°, et encore plus préférentiellement entre 62° et 67°.

Dans ce caisson, chaque profilé de renforcement est situé en bas de la paroi latérale respective, et le fond repose sur la surface d'appui interne de la corniche. Ce caisson peut comporter en outre une traverse sur laquelle le fond est posé, ladite traverse présentant une extrémité en biseau plaquée contre la surface d'appui oblique de la corniche ; l'extrémité en biseau de la traverse peut être soudée sur ladite surface d'appui oblique de la corniche.

Dans le caisson selon l'invention, chaque cloison latérale peut comporter en outre un autre profilé longitudinal de renforcement situé en haut de la paroi latérale, de profil transverse identique à celui du profilé de renforcement situé en bas, et dans la glissière duquel la paroi latérale est insérée de manière que les faces extérieures soient respectivement plaquées contre les faces en vis-à-vis.

Dans ce caisson, chaque cloison renforcée peut comporter en outre un profilé longitudinal de glissière en U comportant un côté supérieur et un côté inférieur et un fond les reliant de manière à définir une glissière longitudinale ouverte vers l'intérieur du caisson, le côté supérieur reposant sur la surface d'appui interne de la corniche et le fond reposant sur la paroi latérale, les côtés supérieur et inférieur présentant des faces en vis-à-vis destinés à respectivement servir de zones inférieure et d'appui de patins d'un chariot coulissant dans les glissières. Ce chariot peut être le chariot d'un système de compaction de déchets, par exemple du type comportant une double pelle articulée.

Le profilé de glissière peut comporter en outre une patte longitudinale s'étendant vers le bas depuis le côté inférieur jusqu'à la paroi latérale de manière à former avec le côté inférieur un bombement.

Ce caisson peut comporter en outre un profilé de rail en L présentant un grand côté reposant contre le fond du profilé de renforcement situé en haut, et un petit côté recouvrant la surface d'appui oblique du profilé de renforcement situé en haut, jusqu'à atteindre le côté supérieur du profilé de glissière.

Dans le caisson selon l'invention, les parois latérales sont formée de panneaux double-peau assemblés à partir de profilés extrudés double-peau. Ces profilés formant la paroi latérale sont conçus pour être assemblés par clipsage et n'ont pas besoin d'être soudés entre eux pour assurer la rigidité mécanique requise. Cependant, il peut être avantageux de les relier par soudage, soit sur toute leur hauteur, soit sur une partie de leur hauteur.

Ainsi, dans un caisson pour BCD, il suffit de les relier par soudage sur une hauteur de quelques décimètres afin d'assurer une étanchéité contre l'eau et le lixiviat. Ce joint de soudure s'effectue entre deux bords de profilés adjacents. Dans le même but, on peut effectuer un joint de soudure continu entre la tôle de fond et les parois latérales et frontal côté intérieur de la benne.

De manière avantageuse, les parois, les éléments constituant le fond du caisson (notamment la tôle plancher), le profilé périphérique, et le longeron-coulisse, sont en aluminium.

Encore un autre objet de l'invention est un profilé longitudinal de renforcement en U comportant deux côtés et un fond les reliant de manière à définir une glissière longitudinale, les côtés présentant des faces en vis-à-vis définissant la largeur de la glissière, et ledit profilé comportant une corniche se projetant depuis un des côtés, appelé côté interne, et présentant une surface d'appui interne. Ce profilé peut présenter les autres caractéristiques énoncées ci-dessus.

### Description

### 1. Figures

Les figures 1 à 8 illustrent différents modes de réalisation de l'invention.
La figure 1 montre une vue en perspective d'une benne de collecte de déchets selon l'invention.
La figure 2 montre une vue en perspective du caisson de la benne de collecte de déchets selon l'invention, la paroi latérale droit étant enlevée.
La figure 3 montre un agrandissement de la partie haute du caisson, pour illustrer notamment le longeron-coulisse dans lequel le chariot du mécanisme de compactage selon l'invention est destiné à coulisser.
Les figures 4 et 5 montrent un agrandissement de la partie basse du caisson, pour illustrer une fonction du profilé périphérique grâce auquel le caisson résiste à la pression interne du compactage.
La figure 6 montre un agrandissement de l'assemblage entre la paroi latérale et la paroi avant du caisson à l'aide du profilé périphérique.
La figure 7 montre un détail de la partie haute du caisson, pour illustrer l'utilisation du profilé périphérique dans la rainure duquel est enchâssée la paroi latérale.

La figure 8 montre un détail du profilé périphérique selon l'invention.

**Liste des repères utilisés sur les figures :**

| | |
|---|---|
| 1 | Benne de collecte de déchets |
| 2 | Caisson |
| 3 | Lève-conteneurs |
| 4 | Châssis |
| 5 | Cabine |
| 20,21 | Vérin de chariot |
| 22 | Chariot coulissant |
| 23,24 | Bielle-palette |
| 25 | Pelle inférieure |
| 26 | Vérin de pelle inférieure |
| 28,29 | Vérin de bielle-palette de la pelle supérieure |
| 30 | Toit |
| 31 | Longeron-coulisse |
| 33 | Longeron avant |
| 38 | Pelle supérieure |
| 40 | Fond de caisson (partie avant) |
| 41 | Fond de caisson (partie centrale) |
| 42,43 | Paroi latérale |
| 44 | Paroi avant |
| 45 | Portillon |
| 46 | Fond de caisson (partie arrière) |
| 47,48 | Vérin de portillon |
| 80 | Profilé périphérique |
| 81 | Rail de guidage latéral |
| 82 | Panneau double-peau |
| 83 | Surface d'appui interne |
| 84 | Surface d'appui externe |
| 85 | Profile de glissière |
| 86 | Bombement de renfort |
| 87 | Surface de la liaison avec la paroi |
| 88 | Tôle plancher |
| 89 | Rebord extérieur |
| 90 | Traverse |
| 91 | Moyen d'interconnexion mécanique |
| 93 | Zone inférieure d'appui des patins de chariot |
| 94 | Zone supérieure d'appui des patins de chariot |
| 95 | Surface d'appui oblique |
| 96 | Zone de soudure bouchon |
| 170,171 | Baguettes de protection |
| 240 | Face extérieure de la peau interne |
| 241 | Face extérieure de la peau externe |
| 242 | Glissière du profilé de renforcement 80 |
| 243,244 | Face en vis-à-vis de la glissière 242 |
| 245 | Corniche |
| 250 | Paroi de séparation des alvéoles |
| 289 | Côté interne de la glissière |
| 290 | Fond de la glissière |
| 291 | Alvéole longitudinale du fond |
| 300 | Côté supérieur du profilé de glissière 85 |
| 301 | Côté inférieur du profilé de glissière 85 |
| 302 | Fond du profilé de glissière 85 |
| 303 | Glissière du profilé de glissière 85 |
| 304 | Patte inférieure |

### 2. Définitions

Nous entendons par « benne de collecte de déchets (BCD) » un véhicule utilisé pour la collecte et le transport de déchets (par exemple, déchets ménagers, déchets encombrants, déchets recyclables dont le chargement s'effectue soit par conteneurs à déchets, soit à la main. Un BDC comprend un châssis-cabine sur lequel est montée une superstructure.

Nous entendons par « BDC à chargement arrière » une BDC dans laquelle les déchets sont chargés dans le caisson par l'arrière.

Nous entendons par « caisson » la partie de la superstructure dans laquelle les déchets collectés sont transportés.

Nous entendons par « cabine » une enceinte montée sur le châssis à l'avant de la superstructure et qui abrite le poste de conduite de la BCD à chargement arrière.

Nous entendons par « superstructure » l'assemblage de tous les composants fixés sur le châssis-cabine de la BCD et incluant le caisson.

Nous entendons par « capacité de la BDC » le volume interne disponible pour les déchets.

Nous entendons par « mécanisme de compactage » le mécanisme permettant de compacter et/ou transférer les déchets dans le caisson.

Ces définitions sont issues des normes européennes EN 1501-1 (2011).

Le terme « aluminium » comprend les alliages d'aluminium.

### 3. Description détaillée

La présente invention présente en particulier une solution à la question de savoir comment assembler les flancs du caisson 2 d'une benne de collecte de déchets 1 (qui sont la partie structurelle importante qui encaisse des efforts de pression interne importante lors du compactage par le mécanisme de compactage) avec le plancher (fond de caisson) et entre eux. Ce lien d'assemblage doit supporter tous les efforts de compactage.

La présente invention présente en même temps une solution au problème de la fixation du mécanisme de compactage sur le caisson 2, et en particulier dans le cas où ce mécanisme de compactage est une pelle qui repose sur le bord supérieur de la cloison dudit caisson 2. En effet, lors du compactage, la pelle est poussée vers le haut, c'est-à-dire subit une force d'arrachement vers le haut.

Ces deux problèmes deviennent particulièrement aiguës lorsque l'on choisit d'utiliser pour la superstructure, et notamment pour le caisson 2, des matériaux plus légers que l'acier, et notamment l'aluminium. A titre d'exemple, il faut éviter que le compactage des déchets ne conduise pas à la déformation des parois 42,43,44 du caisson, sachant que tous les efforts de compaction vont transiter par le flanc du caisson.

Selon l'invention, le problème est résolu par l'utilisation d'un profilé longitudinal de renforcement 80 qui remplit plusieurs fonctions. Il assure la liaison d'angle entre les parois latérales 42,43,44 du caisson 2. Il assure la liaison entre les parois latérales 42,43,44 du caisson 2 et les éléments 40,41,46 qui forment le fond du caisson. Il borde le bord supérieur des parois latérales 42,43,44. Dans chacune de ces trois positions, la sollicitation mécanique du profilé de renforcement 80 est différente. Selon l'invention, on utilise un seul type de profilé longitudinal, dont la conception permet de s'adapter à ces différentes géométries. Ledit profilé longitudinal 80 est donc un profilé périphérique : il se trouve en périphérie des parois 42,43,44 du caisson 2.

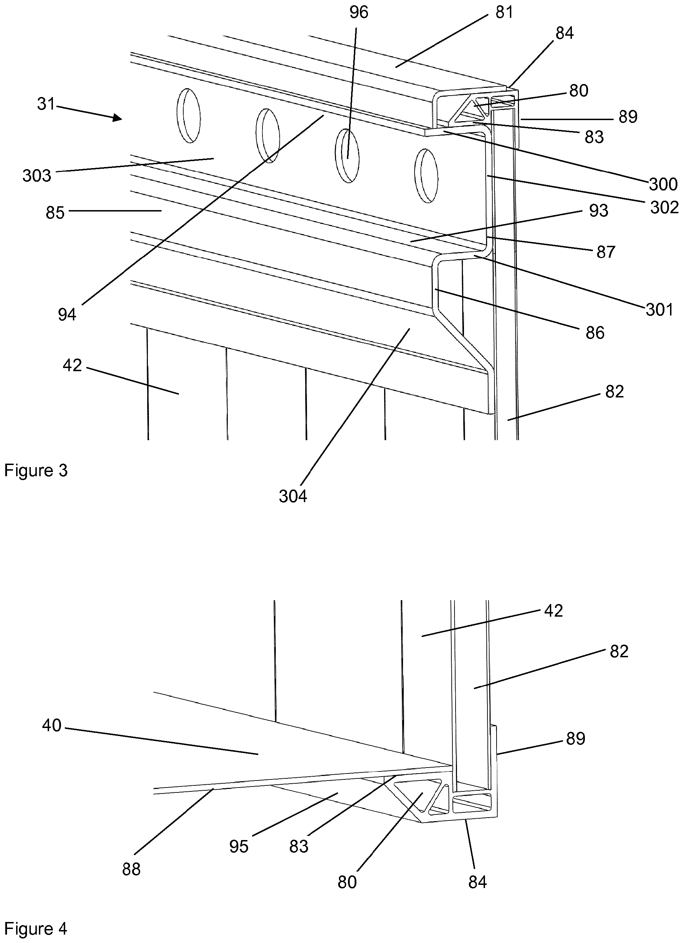

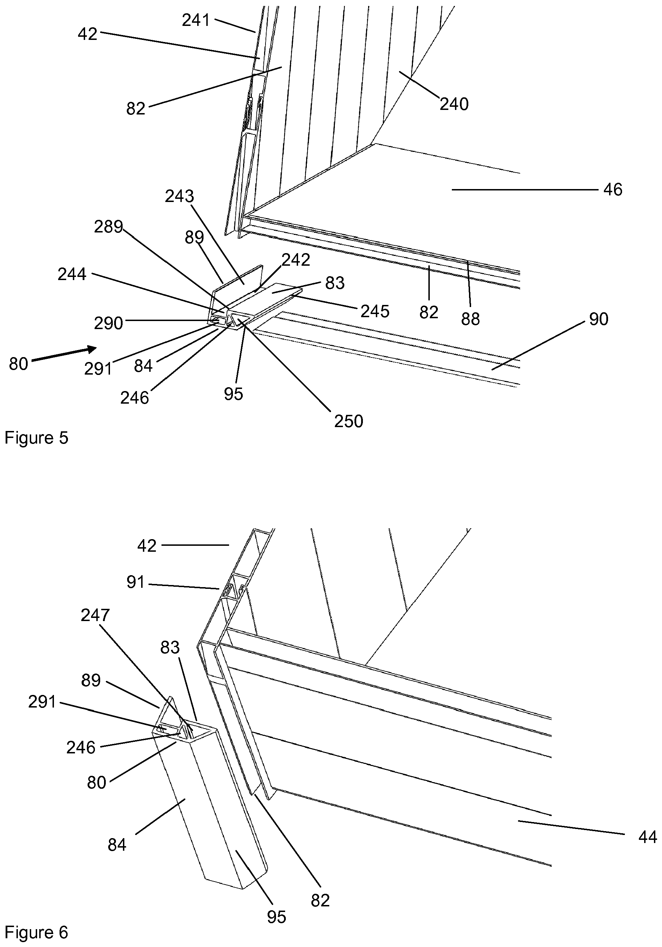

En particulier, ledit profilé longitudinal 80 comporte une surface d'appui interne 83 conçue pour supporter des charges statiques importantes. Ainsi, ladite surface d'appui interne 83 supporte directement la charge du fond 40 du caisson (figure 4), et elle supporte une partie de la pression exercée par le chariot 22 d'un système de compaction des déchets dans une BCD, par l'intermédiaire du longeron-coulisse 31 (figure 3) dans coulisse ledit chariot 22. Par ailleurs, ladite surface d'appui 83 supporte directement la pression interne exercée par le système de compactage sur les parois latérales du caisson 2 (figure 6).

En particulier, la tôle plancher 88 posée sur la surface d'appui interne 83 du profilé périphérique 80. Même en l'absence de soudure entre la tôle 88, le profilé 80 et la paroi verticale 42,43, il n'y a aucun risque d'arrachement, contrairement aux constructions présentant une tôle plancher soudée par le bas.

Les cloisons formant les parois latérales 42,43, la paroi avant 40 et possiblement aussi le toit 30 comportent :
- une paroi double-peau 42, 43 présentant deux faces extérieures dos-à-dos 240, 241,
- un profilé longitudinal de renforcement 80 en U comportant :
   -- deux côtés 89, 289 et un fond 290 les reliant de manière à définir une glissière longitudinale 242, les côtés 89, 289 présentant des faces en vis-à-vis 243, 244 définissant la largeur de la glissière 242,
   -- une corniche 245 se projetant depuis un des côtés 289, appelé côté interne, et présentant une surface d'appui interne 83,
et sont caractérisées en ce que la paroi double-peau 42,43 est insérée dans la glissière 242 de manière que les faces extérieures 240, 241 soit respectivement plaquées contre les faces en vis-à-vis 243, 244.

Comme il sera expliqué en plus grand détail ci-dessous, il est avantageux de relier par un joint de soudure la tôle plancher 88, le profilé périphérique 80 et le panneau doublé-peau 82. Dans ce but, la tôle plancher 88 s'arrête à environ 5 mm du bord (non montré sur les figures).

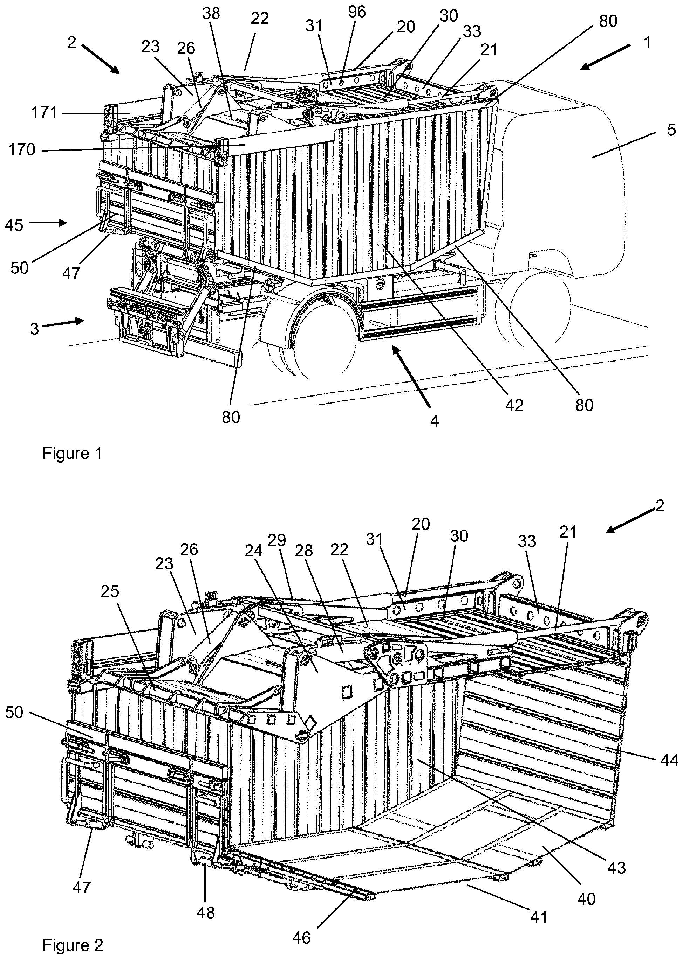

La figure 1 montre une BCD 1 avec un caisson 2 selon l'invention. La BCD 1 comprend typiquement un châssis 4 avec une cabine 5 et une superstructure comportant le caisson 2, un lève-conteneurs 3 et un système de compactage.

Dans le cadre de la présente invention, on préfère que le caisson 2, comme toute la superstructure soit allégé autant que possible, afin d'augmenter la charge utile du caisson par rapport au poids total du véhicule. Cependant, la BCD 1 doit rester suffisamment rigide et robuste. Ce problème devient particulièrement aiguë lorsque l'on choisit d'utiliser pour la superstructure, et notamment pour le caisson, des matériaux plus légers que l'acier, et notamment l'aluminium. A titre d'exemple, il faut éviter que le compactage des déchets ne conduise à la déformation des parois du caisson.

La figure 2 montre un caisson 2 selon l'invention. Le fond du caisson 2 comprend trois parties: une partie centrale 41, sensiblement horizontale, une partie avant 40 et une partie arrière 46. Par ailleurs, le caisson 2 comporte des parois latérales 42,43, une paroi avant 44 et un portillon 45 à l'arrière. Le portillon 45 est conçu pour permettre un chargement manuel de la benne, ce qui offre une plus grande souplesse d'utilisation.

Dans un mode de réalisation avantageux, le caisson est fabriqué en demi-produits en alliage d'aluminium. Comme montré sur les figures 3 à 7, les parois latérales 42,43, la paroi avant 44 et le toit 30 sont formées de panneaux double-peau 82, de préférence à partir de profilés en alliage d'aluminium conçus pour être assemblés par un moyen d'interconnexion mécanique 91 tel que le clipsage. Ces profilés sont enchâssés en haut et en bas dans un profilé périphérique 80 qui assure le transfert d'une partie des forces exercées de l'intérieur par le système de compactage sur le fond, sur l'avant et sur le haut du caisson vers les parois du caisson 2. Dans ce mode d'assemblage on n'a pas besoin de souder entre eux les profilés pour assurer la rigidité mécanique requise. Cependant, il peut être avantageux de les relier par soudage sur une hauteur de quelques décimètres afin d'assurer une étanchéité contre l'eau et le lixiviat. Ce joint de soudure (non montré sur les figures) s'effectue entre deux bords de profilés adjacents. Dans le même but, on peut effectuer un joint de soudure continu entre la tôle de fond 40,41,46 et les parois latérales et frontal côté intérieur de la benne. Dans un mode de réalisation avantageux, la tôle de fond 40,41,46 n'arrive pas en butée des éléments qui constituent les parois verticales 42,43, 44, mais s'arrête à quelques millimètres desdits éléments ; cela permet de relier par un seul joint de soudure à la fois la tôle de fond 40,41,46, le profilé périphérique 80 et les éléments constituant les parois verticales.

Pour la paroi avant 44, les profilés formant les panneaux double-paroi 82 sont de préférence positionnés avec leur sens long horizontalement, alors que pour les parois latérales 42,43, ils sont emboités verticalement dans ledit profilé périphérique 80.

L'utilisation de l'aluminium allège le caisson et contribue ainsi de manière significative à atteindre les buts de l'invention. Les alliages d'aluminium, judicieusement choisies pour l'usage dans des véhicules industriels, résistent aussi très bien à la corrosion, sachant que le lixiviat des déchets et en général un liquide particulièrement corrosif.

La tôle de fond 41,41,46 est avantageusement également en alliage d'aluminium. Un profilé périphérique 80 en alliage d'aluminium entoure les parois latérales 42,43 et la paroi avant ; il est essentiel pour assurer au caisson 2 la rigidité mécanique nécessaire pour supporter la pression interne exercée par le système de compactage. Le toit 30 est fixe.

La partie avant du fond du caisson 46 comporte un panneau double-peau (du même type que celui 82 utilisé pour la paroi latérale 42,43 du caisson), et au-dessus une tôle. L'utilisation d'aluminium pour les parois et le fond du caisson permet une réparation aisée, notamment par soudage, de zones endommagées ; il n'y a pas besoin de protéger ces zones par peinture contre la corrosion, si les alliages choisis sont bien adaptés à l'usage dans des véhicules industriels.

Nous décrivons ici en détail le profilé longitudinal de renforcement 80 selon l'invention, en référence notamment aux figures 5, 6 et 8. Il s'agit d'un profilé en U, le U étant formé par le rebord extérieur 89 (dont la face interne porte le repère 243), la glissière 242 et la face portant le repère 244, en vis-à-vis par rapport à la face 243. Le plan de la surface d'appui interne 83 est sensiblement perpendiculaire par rapport au plan du rebord 89 (i.e. par rapport au plan de la face interne du rebord 243). Une corniche 245 qui se projette depuis un des côtés 289, appelé côté interne, et présentant une surface d'appui interne 83. Le profilé 80 présente de préférence trois alvéoles longitudinales : une alvéole appelée alvéole longitudinale du fond 291, qui se situe sensiblement au-dessous de la surface de la glissière 242, et / ou une (de préférence) deux alvéoles longitudinales 246,247 de la corniche 245. Les alvéoles longitudinales 246,247 sont séparées par une paroi 250. Le plan de la surface d'appui externe 84 est sensiblement perpendiculaire par rapport au plan du rebord 89 (i.e. par rapport au plan de la face interne du rebord 243). Une surface d'appui oblique 95 relie la surface d'appui externe 84 au rebord de la corniche 245.

Le profilé longitudinal de renforcement 80 selon l'invention peut présenter un nombre plus important d'alvéoles longitudinales, mais cela n'est pas nécessaire, complique sa fabrication et augmente son coût.

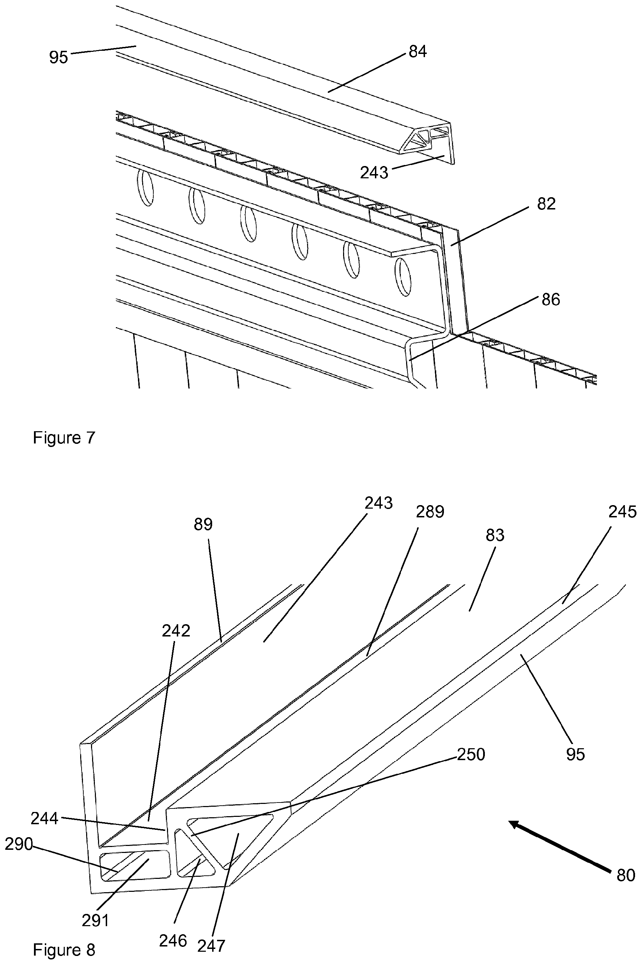

Comme montré sur la figure 3, les longerons-coulisse 31,32 dans lesquels coulisse le chariot 22 du mécanisme de compactage (voir la figure 2) sont formées dans un profilé glissière 85 en tôle pliée. Ce profilé glissière 85 comporte un bombement de renfort 86 ; il comporte également une patte inférieure 304 qui prend appui contre la paroi 42. Le fond 302 du profilé de glissière 85 est soudé contre le panneau double-peau 82, notamment à l'aide de soudures bouchon 96. Le côté supérieur 300 du profilé glissière 85 vient en appui sur la surface d'appui interne 83 du profilé périphérique 80, ce dernier étant fixé aux panneaux double-peau 82 qui sont enchâssés dans sa rainure glissière 242 en U, le rebord extérieur 89 du profilé protégeant la partie supérieure des panneaux double-peau 82 (figure 7). Un rail de guidage 81 prend appui sur la surface d'appui externe 84 du profilé périphérique 80.

Ainsi dans toutes les situations d'utilisation du profilé périphérique de renforcement 80, c'est sa surface d'appui interne 83 qui encaisse le maximum de charge. Un des avantages de l'invention est qu'un seul type de profilé (i.e. une seule filière) suffit pour assurer différentes fonctions dans le caisson 2. Cela engendre une économie considérable en termes de coût d'approvisionnement.

Dans un mode de réalisation avantageux, ce profilé périphérique de renforcement 80 est utilisé sur la périphérie complète du caisson 2 ; cela permet de transférer les efforts de l'intérieur du caisson 2 vers les flancs par un assemblage mécano-soudé en aluminium. L'ensemble des éléments soumis à l'effort sont assemblés par soudure sur la face intérieure 83 du profilé 80, notamment le fond du caisson 40,41, la paroi avant 44, la paroi arrière, et les profilés de glissière 85.

D'une manière générale, des joints de soudure supplémentaires peuvent être réalisés en tant que de besoin entre les différentes lignes de contact entre les panneaux double-peau 82 et les éléments (profilés) qui les composent, le profilé périphérique 80, le profilé de glissière 85, le rail de guidage latéral 81, les éléments constituant le fond de caisson 40,41,46.

A titre d'exemple, on a réalisé un caisson selon l'invention d'une capacité d'environ 8,5 m³ équipé d'un système de compactation avec pelle articulée, comme montré sur les figures 1 et 2. Ce caisson peut être monté sur des châssis de camion de grande série, conçu typiquement pour un poids total autorisé en charge (PTAC) de 7,5 à 9 tonnes. Les BCD selon l'état de la technique, avec une benne en acier, nécessitent un châssis conçu pour un PTAC d'au moins 10 t afin de pouvoir présenter une charge utile d'environ 3 tonnes).

La tôle plancher 88 du caisson avait une épaisseur de 4 mm (alliage AG3 standard). Le profilé périphérique 80 a été réalisé en alliage d'aluminium AA 6106 T6. Sa plus grande dimension était de l'ordre de 90 mm, la largeur de la surface d'appui interne 83 était de l'ordre de l'ordre de 60 mm, et la largeur du rebord extérieur 89 était de l'ordre de 65 mm. Les profilés formant les panneaux double-peau 82 pour les parois latérales et avant et pour le panneau arrière du fond du caisson avaient une largeur de 200 mm et une épaisseur de 30 mm. Pour le toit 30, une épaisseur de 25 mm était suffisante, toujours dans le but d'alléger la superstructure.

## Revendications

1. Profilé longitudinal de renforcement (80) en U, de préférence en alliage d'aluminium, pour une cloison renforcée pour caisson de benne de collecte de déchets comportant une paroi double-peau (42, 43) formée à partir de profilés en alliage d'aluminium, ledit profilé comportant :
-- deux côtés (89, 289) et un fond (290) les reliant de manière à définir une glissière longitudinale (242), les côtés (89, 289) présentant des faces en vis-à-vis (243, 244) définissant la largeur de la glissière (242), ladite glissière (242) étant apte à loger la paroi double-peau (42, 43) insérée de manière que les faces extérieures (240, 241) de la paroi double-peau (42, 43) soient respectivement plaquées contre les faces en vis-à-vis (243, 244) de la glissière (242),
-- une corniche (245) se projetant depuis un des côtés (289), appelé côté interne, et présentant une surface d'appui interne (83), la largeur de la surface d'appui (83) de la corniche (245) étant supérieure à la largeur de la glissière (242), **caractérisé en ce que** la surface d'appui interne (83) de la corniche (245) affleure le côté interne (289), **en ce que** la corniche (245) présente, sous la surface d'appui interne (83), une surface d'appui oblique (95) se rapprochant de la surface d'appui interne (83) en s'éloignant du côté interne (289), et **en ce que** le fond (290) présente au moins une alvéole longitudinale (291) et la corniche (245) présente au moins une alvéole longitudinale (246, 247).

2. Profilé selon la revendication 1 dans lequel la corniche (245) présente deux alvéoles longitudinales séparées par une paroi oblique (250) s'éloignant de la surface d'appui interne (83) et du côté interne (289).

3. Cloison renforcée pour caisson de benne de collecte de déchets comportant :
- une paroi double-peau (42 ; 43) formée à partir de profilés en alliage d'aluminium, ladite paroi double-peau présentant deux faces extérieures dos-à-dos (220, 221),
- un profilé longitudinal selon l'une des revendications 1 ou 2,
cloison dans laquelle la paroi double-peau (42 ; 43) est insérée dans la glissière (242) de manière que les faces extérieures (240, 241) soient respectivement plaquées contre les faces en vis-à-vis (243, 244),

4. cloison renforcée selon la revendication 3 , dans laquelle, l'autre côté (89) étant appelé côté externe, le côté externe (89) s'élève au-dessus de la surface d'appui interne (83) de la corniche (245).

5. Cloison renforcée selon l'une quelconque des revendications 3 ou 4, dans laquelle la corniche (245) présente deux alvéoles longitudinales séparées par une paroi oblique (250) s'éloignant de la surface d'appui interne (83) et du côté interne (289).

6. Cloison renforcée selon l'une quelconque des revendications 3 à 5, dans laquelle la paroi double peau (42 ; 43) comporte plusieurs panneaux double-peau (82) côte-à-côte longitudinalement, chaque panneau étant clipsé à son ou ses panneaux adjacents et optionnellement soudé.

7. Cloison renforcée selon l'une quelconque des revendications 3 à 6, dans laquelle la paroi double-peau (42 ; 43) est soudée longitudinalement au côté interne (289).

8. Caisson (2), pour benne de collecte de déchets (1), comportant au moins une cloison renforcée droite selon l'une quelconque des revendications 3 à 7, dont la paroi double-peau (42) forme une paroi latérale droite du caisson (2), et une cloison renforcée gauche selon l'une quelconque des revendications 3 à 7, dont la paroi double-peau (43) forme une paroi latérale gauche du caisson (2), les corniches (245) se projetant vers l'intérieur du caisson (2).

9. Caisson (2) de benne de collecte de déchets selon la revendication 8, comportant en outre un fond (41, 42, 46) reliant les parois latérales (42, 43), le fond comportant une partie centrale (41) plane et une partie arrière (46) plane inclinée par rapport à la partie centrale (41) de manière à s'élever vers l'arrière par rapport à la partie centrale (41), ladite partie arrière (46) faisant un angle avec la partie centrale (40) qui est de préférence compris entre 55° et 70°, plus préférentiellement entre 60° et 70°, et encore plus préférentiellement entre 62° et 67°.

10. Caisson (2) selon l'une quelconque des revendications 8 ou 9, dans lequel chaque profilé de renforcement (80) est situé en bas de la paroi latérale (42, 43) respective, et dans lequel le fond (40, 41, 46) repose sur la surface d'appui interne (83) de la corniche (245).

11. Caisson (2) selon la revendication 10, comportant en outre une traverse (90) sur laquelle le fond (40, 41, 46) est posé, la traverse (90) présentant une extrémité en biseau plaquée contre la surface d'appui oblique (95) de la corniche (245), et l'extrémité en biseau de ladite traverse (90) étant de préférence soudée contre ladite surface oblique (95) de la corniche (245).

12. Caisson (2) selon la revendication 10 ou 11, dans lequel chaque cloison latérale comporte en outre un autre profilé longitudinal de renforcement (80) situé en haut de la paroi latérale (42 ; 43), de profil transverse identique à celui du profilé de renforcement (80) situé en bas, et dans la glissière (242) duquel la paroi latérale (42 ;43) est insérée de manière que les faces extérieures (240, 241) soit respectivement plaquées contre les faces en vis-à-vis (243, 244).

13. Caisson (2) selon la revendication 12, dans lequel chaque cloison renforcée comporte en outre un profilé longitudinal de glissière (85) en U comportant un côté supérieur (300) et un côté inférieur (301) et un fond (302) les reliant de manière à définir une glissière longitudinale (303) ouverte vers l'intérieur du caisson (2), le côté supérieur reposant sur la surface d'appui interne (83) de la corniche (245) et le fond (302) reposant sur la paroi latérale (42 ;43), les côtés supérieur (300) et inférieur (301) présentant des faces en vis-à-vis destinés à respectivement servir de zones inférieure (93) et (94) d'appui de patins d'un chariot coulissant dans les glissières (302).

14. Caisson (2) selon la revendication 13, dans lequel le profilé de glissière (85) comporte en outre une patte longitudinale (304) s'étendant vers le bas depuis le côté inférieur (301) jusqu'à la paroi latérale (42 ; 43) de manière à former avec le côté inférieur (301) un bombement (86).

15. Caisson (2) selon la revendication 13 ou 14, comportant en outre un profilé de rail (81) en L présentant un grand côté reposant contre le fond (290) du profilé de renforcement (80) situé en haut, et un petit côté recouvrant la surface d'appui oblique (95) du profilé de renforcement situé en haut, jusqu'à atteindre le côté supérieur (300) du profilé de glissière (85).

## Patentansprüche

1. Längliches Verstärkungsprofil (80) in U-Fom, vorzugsweise aus einer Aluminiumlegierung, für eine verstärkte Trennwand eines Müll-Sammelfahrzeugkastens, eine doppelschichtige Wandung (42, 43) umfassend, die aus Profilen aus einer Aluminiumlegierung gebildet wird, wobei das besagte Profil Folgendes umfasst:
- zwei Seiten (89, 289) und einen Boden (290), welcher die beiden verbindet, um eine Längsgleitelement (242) zu definieren, wobei die Seiten (89, 289) einander gegenüber liegende Flächen (243, 244) aufweisen, welche die Breite des Längsgleitelements (242) definieren,
wobei das besagte Längsgleitelement (242) imstande ist, die doppelschichtige Wandung (42, 43) aufzunehmen, die eingeführt wird, sodass die Außenflächen (240, 241) der doppelschichtigen Wandung (42, 43) jeweils an den einander gegenüber liegende Flächen (243, 244) des Längsgleitelements (242) anliegen,
- einen Überhang (245), der aus einer der Seiten (289), die Innenseite genannt wird, herausragt und eine innere Auflagefläche (83) aufweist,
wobei die Breite der Auflagefläche (83) des Überhangs (245) größer ist, als die Breite des Längsgleitelements (242),
**dadurch gekennzeichnet, dass** die innere Auflagefläche (83) des Überhangs (245) die Innenseite (289) leicht berührt, dadurch, dass der Überhang (245) unterhalb der inneren Auflagefläche (83) eine schräge Auflagefläche (95) aufweist, die sich der inneren Auflagefläche (83) annähert und sich von der Innenseite (289) entfernt, und dadurch, dass der Boden (290) zumindest einen länglichen Rahmen (291) aufweist und der Überhang (245) zumindest einen länglichen Rahmen (246, 247) aufweist.

2. Profil nach Anspruch 1, wobei der Überhang (245) zwei längliche Rahmen aufweist, die durch eine schräge Wand (250) voneinander getrennt sind, die sich von der inneren Auflagefläche (83) und von der Innenseite (289) entfernt.

3. Verstärkte Trennwand für einen Müll-Sammelfahrzeugkasten, Folgendes umfassend:
- eine doppelschichtige Wandung (42, 43), die aus Profilen aus einer Aluminiumlegierung gebildet wird, wobei die besagte doppelschichtige Wandung zwei Außenflächen Rücken an Rücken (220, 221) aufweist,
- ein längliches Profil nach einem der Ansprüche 1 oder 2,
Trennwand, in welche die doppelschichtige Wandung (42; 43) in das Längsgleitelement (242) eingeführt wird, sodass die Außenflächen (240, 241) jeweils an den einander gegenüber liegende Flächen (243, 244) anliegen.

4. Verstärkte Trennwand nach Anspruch 3, wobei die andere Seite (89) Außenseite genannt wird, und eben die Außenseite (89) über die innere Auflagefläche (83) des Überhangs (245) hinausragt.

5. Verstärkte Trennwand nach einem der Ansprüche 3 oder 4, wobei der Überhang (245) zwei längliche Rahmen aufweist, die durch eine schräge Wandung (250) voneinander getrennt werden, die sich von der inneren Auflagefläche (83) und von der Innenseite (289) entfernt.

6. Verstärkte Trennwand nach einem der Ansprüche 3 bis 5, wobei die doppelschichtige Wandung (42, 43) mehrere doppelschichtige Platten (82) umfasst, die in Längsrichtung aneinander liegen, wobei jede Platte an seine benachbarte Platte oder benachbarten Platte geclippt, und optional verschweißt wird.

7. Verstärkte Trennwand nach einem der Ansprüche 3 bis 6, wobei die doppelschichtige Wandung (42, 43) längs an der Innenseite (289) verschweißt ist.

8. Kasten (2) für ein Müll-Sammelfahrzeug (1), zumindest eine verstärkte rechte Trennwand nach einem der Ansprüche 3 bis 7 umfassend, wobei die doppelschichtige Wandung (42) eine rechte Seitenwandung des Kastens (2) bildet, und eine verstärkte linke Trennwand nach einem der Ansprüche 3 bis 7, wobei die doppelschichtige Wandung (43) eine linke Seitenwandung des Kastens (2) bildet, wobei sich die Überhänge (245) ins Innere des Kastens (2) erstrecken.

9. Kasten (2) für ein Müll-Sammelfahrzeug nach Anspruch 8, darüber hinaus einen Boden (41, 42, 46) umfassend, der die Seitenwandungen (42, 43) miteinander verbindet, wobei der Boden einen mittleren ebenenen Abschnitt (41) umfasst, sowie einen hinteren ebenenen Abschnitt (46), der im Verhältnis zum mittleren Abschnitt (41) geneigt ist, um sich im Verhältnis zum mittleren Abschnitt (41) nach hinten zu erheben, wobei der besagte hintere Abschnitt (46) mit dem mittleren Abschnitt (40) einen Winkel einschlägt, der vorzugsweise zwischen 55° und 70°, besser zwischen 60° und 70°, und am besten zwischen 62° und 67° liegt.

10. Kasten :2) nach einem der Ansprüche 8 oder 9, wobei sich jedes Verstärkungsprofil (80) unten an der jeweiligen Seitenwandung (42, 43) befindet, und wobei der Boden (40, 41, 46) auf der inneren Auflagefläche (83) des Überhangs (245) aufliegt,

11. Kasten (2) nach Anspruch 10, darüber hinaus einen Querträger (90) umfassend, auf dem der Boden (40, 41, 46) aufgelegt ist, wobei der Querträger (90) ein abgeschrägtes Ende aufweist, das an der schrägen Auflagefläche (95) des Überhangs (245) anliegt, und wobei das abgeschrägte Ende des besagten Querträgers (90) vorzugsweise an der besagten schrägen Auflagefläche (95) des Überhangs (245) angeschweißt ist.

12. Kasten (2 nach Anspruch 10 oder 11, wobei jede Seitenwandung darüber hinaus ein weiteres längliches Verstärkungsprofil (80) umfasst, das sich oben an der Seitenwandung (42; 43) befindet, mit einem Querprofil gleich jenem des Verstärkungsprofils (80), das sich unten befindet, und in dessen Längsgleitelement (242) die Seitenwandung (42; 43) eingeführt wird, damit die Außenflächen (240, 241) jeweils an den einander gegenüber liegende Flächen (243, 244) anliegen.

13. Kasten (2) nach Anspruch 12, wobei jede verstärkte Trennwand darüber hinaus ein längliches Gleitelementprofil (85) in U-Form umfasst, das eine Oberseite (300) und eine Unterseite (301) und einen Boden (302) umfasst, der diese miteinander verbindet, um ein Längsgleitelement (303) zu definieren, das ins Innere des Kastens (2) offen ist, wobei die Oberseite auf der inneren Auflagefläche (83) des Überhangs (245) aufliegt und der Boden (302) auf der Seitenwandung (42; 43) aufliegt, wobei die Oberseiten (300) und die Unterseiten (301) gegenüber liegende Flächen aufweisen, die jeweils dazu bestimmt sind, als untere Zonen (93) und (94) zum Auflegen von Kufen eines Schiebewagens in den Gleitelementen (302) zu dienen.

14. Kasten (2) nach Anspruch 13, wobei das Gleitelementprofil (85) darüber hinaus eine längliche Lasche (304) umfasst, die sich von der Unterseite (301) bis zur Seitenwandung (42; 43) nach unten erstreckt, um mit der Unterseite (301) eine Ausbuchtung (86) zu bilden.

15. Kasten (2) nach Anspruch 13 oder 14, darüber hinaus ein Schienenprofil (81) in L-Form umfassend, das eine lange Seite aufweist, welche am Boden (290) des oben befindlichen Verstärkungsprofils (80) anliegt, und eine kurze Seite, die die schräge Auflagefläche (95) des oben befindlichen Verstärkungsprofils abdeckt, bis sie die Oberseite (300) des Gleitelementprofils (85) erreicht.

## Claims

1. U-shaped longitudinal reinforcement profile (80), preferably made from an aluminium alloy, for a reinforced partition for a waste collection vehicle container comprising a double skin wall (42, 43) formed from aluminium alloy profiles, said profile comprising:
- two sides (89, 289) and a bottom (290) connecting the former in such a way as to define a longitudinal slide (242), the sides (89, 289) having opposing faces (243, 244) defining the width of the slide (242), said slide (242) being capable of housing the double skin wall (42, 43) inserted such that the outer faces (240, 241) of the double skin wall (42, 43) are respectively pressed against the opposing faces (243, 244) of the slide (242),
- an overhang (245) protruding from one of the sides (289), referred to as the inner side, and having an inner bearing surface (83), the width of the bearing surface (83) of the overhang (245) being greater than the width of the slide (242),
**characterised in that** the inner bearing surface (83) of the overhang (245) is flush with the inner side (289), **in that** the overhang (245) has, beneath the inner bearing surface (83), an oblique bearing surface (95) moving closer to the inner bearing surface (83) by moving away from the inner side (289), and **in that** the bottom (290) has at least one longitudinal cell (291), and the overhang (245) has at least one longitudinal cell (246, 247).

2. Profile according to claim 1, wherein the overhang (245) has two longitudinal cells separated by an oblique wall (250) moving away from the inner bearing surface (83) and from the inner side (289).

3. Reinforced partition for a waste collection vehicle container comprising:
- a double skin wall (42; 43) formed from aluminium alloy profiles, said double skin wall having two back-to-back outer faces (220, 221),
- a longitudinal profile according to one of claims 1 or 2,
a partition wherein the double skin wall (42; 43) is inserted into the slide (242) such that the outer faces (240, 241) are respectively pressed against the opposing faces (243, 244).

4. Reinforced partition according to claim 3, wherein, the other side (89) being referred to as the outer side, the outer side (89) rises above the inner bearing surface (83) of the overhang (245).

5. Reinforced partition according to any one of claims 3 or 4, wherein the overhang (245) has two longitudinal cells separated by an oblique wall (250) moving away from the inner bearing surface (83) and from the inner side (289).

6. Reinforced partition according to any one of claims 3 to 5, wherein the double skin wall (42; 43) comprises a plurality of double skin panels (82) longitudinally side-by-side, each panel being clipped to its adjacent panels and optionally welded.

7. Reinforced partition according to any one of claims 3 to 6, wherein the double skin wall (42; 43) is longitudinally welded to the inner side (289).

8. Container (2) for a waste collection vehicle (1), comprising at least one right reinforced partition according to any one of claims 3 to 7, the double skin wall (42) of which forms a right side wall of the container (2), and a left reinforced partition according to any one of claims 3 to 7, the double skin wall (43) of which forms a left side wall of the container (2), the overhangs (245) protruding inwards with respect to the container (2).

9. Container (2) for a waste collection vehicle according to claim 8, further comprising a bottom (41, 42, 46) connecting the side walls (42, 43), the bottom including a flat central portion (41) and a flat rear portion (46) inclined in relation to the central portion (41) so as to rise upwards towards the rear in relation to the central portion (41), said rear portion (46) forming an angle with the central portion (40), which is preferably between 55° and 70°, more preferably between 60° and 70°, and even more preferably between 62° and 67°.

10. Container (2) according to any one of claims 8 or 9, wherein each reinforcement profile (80) is located at the bottom of the respective side wall (42, 43), and wherein the bottom (40, 41, 46) rests on the inner bearing surface (83) of the overhang (245).

11. Container (2) according to claim 10, further comprising a cross member (90) on which the bottom (40, 41, 46) is placed, the cross member (90) having one bevelled end pressed against the oblique bearing surface (95) of the overhang (245), and the bevelled end of said cross member (90) being preferably welded against said oblique surface (95) of the overhang (245).

12. Container (2) according to claim 10 or 11, wherein each side partition further comprises another longitudinal reinforcement profile (80) located at the top of the side wall (42; 43), having a transverse profile identical to that of the reinforcement profile (80) located at the bottom, and in the slide (242), the side wall (42; 43) of which is inserted such that the outer faces (240, 241) are respectively pressed against the opposing faces (243, 244).

13. Container (2) according to claim 12, wherein each reinforced partition further comprises a longitudinal U-shaped slide profile (85) comprising an upper side (300), a lower side (301) and a bottom (302) connecting the former in such a way as to define a longitudinal slide (303) open inwards with respect to the container (2), the upper side resting on the inner bearing surface (83) of the overhang (245) and the bottom (302) resting on the side wall (42, 43), the upper side (300) and lower side (301) having opposing faces intended to respectively serve lower bearing zones (93) and (94) for the shoes of a carrier sliding in the slides (302).

14. Container (2) according to claim 13, wherein the slide profile (85) further comprises a longitudinal tab (304) extending downwards from the inner side (301) to the side wall (42; 43) in such a way as to form a bulge (86) with the inner side (301).

15. Container (2) according to claim 13 or 14, further comprising an L-shaped rail profile (81) having a large side resting against the bottom (290) of the reinforcement profile (80) located at the top, and a small side covering the oblique bearing surface (95) of the reinforcement profile located at the top, reaching as far as the upper side (300) of the slide profile (85).
